# EUROPEAN PATENT APPLICATION

(11) **EP 2 334 067 A1**
(43) Date of publication of application: **15.06.2011**
(21) Application number: 09290908.4
(22) Date of filing: 04.12.2009
(51) Int. Cl.: H04N 7/14, H04M 3/56, H04M 7/00, H04L 12/18

(54) **Method for including a video image in a voice communication between a first user entity and a second user entity, application server, media server and user entity for realizing such a method**

(71) Applicant: Alcatel Lucent, 75008 Paris (FR)
(72) Inventor: Wang, Daping, 3129 Box Hill North (AU); Whelan, Martin Dermot, Doreen, VIC 3753 (AU)
(74) Representative: Narmon, Gisèle Marie Thérèse

(57) **Abstract**

A method for including a video image in a voice communication between a first user entity and a second user entity. The method including the steps of :
- the first user entity sending a request for setting up the voice communication with the second user entity to a communication server, where the request includes a feature subscription for inclusion of video images,
- the communication server upon detection of the feature subscription informing an application server thereof,
- the application server retrieving from a preference database user preference information for the first user entity and forwarding the user preference information to a media server,
- the application server setting up a video communication between the media server and the second user entity,
- the media server retrieving the video image from an image database based on the user preference information and sending the video image to the second user entity and all setup variants thereof.

## Description

The invention relates to a method for including a video image in a voice communication between a first user entity and a second user entity.

In the known communication methods supporting inclusion of a video image in a voice communication, the involved user entities always have to support video communication.

Also, people participating in a video telephone conversation not always like to be seen when talking, but like nevertheless to be able to send video images within their video communication.

It is an object of the invention to provide a method that makes it possible to include a video image in a voice communication between user entities, even if one of the user entities does not support video communication.

The method according to the invention realizes this object as specified in claim 1.

In this way, even if the first user entity does not support video communication, the first user entity can have a video image sent to the second user entity as part of a voice communication with this second user entity by indicating in the voice communication set up request its subscription to a video image inclusion feature. If the first entity does support video communication, it can in this way limit its communication with the second user entity to a voice communication, and still have the possibility to include a video image in the voice communication.

In an alternative the feature subscription is part of the acceptance of a communication setup request sent by the second user entity as in claim 3.

In still another alternative the feature subscription is part of a communication setup request by the first user entity or acceptance by the second user entity in accordance with claim 2 and claim 4 respectively, where the video image is then transmitted to the first user entity thus realizing the mentioned objective even if the second user entity does not support video communication.

An additional feature of an embodiment of the method according to the invention is that said voice communication between said first user entity and said second user entity is performed via said media server and that said media server retrieves said video image from said image database when detecting voice communication at least from said first user entity to said second user entity or that said voice communication between said first user entity and said second user entity is performed via said media server and that said media server retrieves said video image from said image database when detecting voice communication at least from said second user entity to said first user entity. In this way a video image is shown dynamically when voice communication is detected.

If both end user entities support video communication, a video image can be transmitted to the user entity from which the voice communication originates as well as to the entity that receives the voice communication, or to both. Selection of what option to choose can be done based on information contained in the feature subscription or based on the user preference information in accordance with claim 8 and claim 9 respectively.

Another additional feature of an embodiment of the method according to the invention is that selection of said video image from said image database is also made based on at least one characteristic of said voice communication. In this way different video images are shown based on the result of the analysis of the voice signal. Such a result can for instance indicate anger or happiness and video images representative for these moods can then be transmitted.

Still another feature of an embodiment of the method according to the invention is that said voice communication between said first user entity and said second user entity is performed via said communication server. In this way less resources will be necessary in the media server.

The invention also relates to an application server, to a media server and to a user entity realizing the above methods.

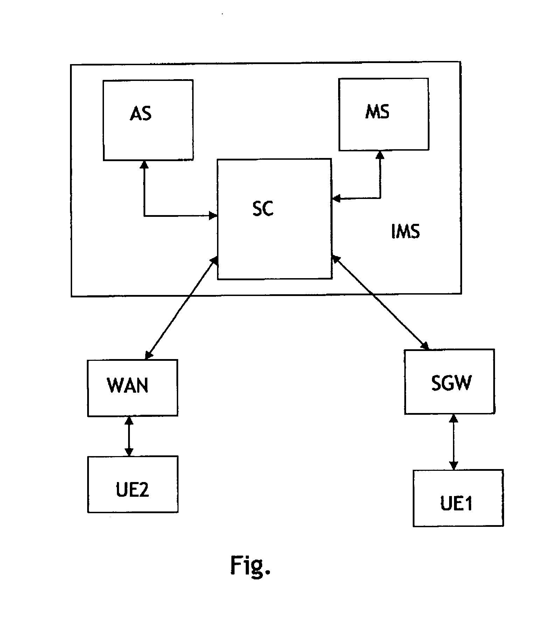

System and servers in accordance with embodiments of the present invention are hereafter described, by way of example only, and with reference to the accompanying figure Fig.

Fig. schematically represents an IP Multimedia subssystem IMS to which a user entity UE1 and a user entity UE2 are connected via respective access nodes SGW and WAN. UE1 is a Plain Ordinary Telephone Service (POTS) telephone, that can thus not support video communication, and UE2 is a wireless device with a video screen. SGW is a Session Initiation Protocol (SIP) gateway and WAN is a wireless access network.

IMS includes a session control entity SC coupled to an Application Server AS and to a Media Server MS. AS contains a feature database (not shown) with information on communication features supported for the IMS users and MS contains a video image database (also not shown) with avatar videos that can be provided to the IMS users supporting video communication. The avatar videos are loaded in the image database via a content management system (also not shown).

AS, MS and CS comunicate with each other via SIP as specified in the RFC3261 standard. WAN provides access from a mobile network and SGW bridges the communication from a public swithed telephone network PSTN to this SIP dominant signalling network. Further details on the structure and working of IMS can be found in concerned standards such as 3GPP TS 23.228 and TS 24.229. They are not described here because they are not relevant for the working of the considered embodiment of the invention.

The working of the method according to the invention is hereafter described by means of an example scenario where UE1 sets up a voice communication with UE2 and wants an avatar video representing itself to be sent to UE2 with this voice communication.

Before dialling the address of UE2, UE1 uses a specific prefix to indicate that it wants to activate a video feature subscription. SGW translates the connection setup request into a SIP INVITE message with SDP (Session Description Protocol) content reflecting UE1's address and indicating that a voice connection should be set up to UE2 with video feature subscription. Upon detection of the video feature subscription preference, SC forwards the request to AS. AS then consults the feature database and when it finds out that UE1 has preferences to use an avatar video for its call, it creates an INVITE to UE2 with SDP content reflecting the IP address of MS as contact for a voice and a video communication. Upon acceptance by UE2, AS returns the negotiated SDP result in 200 OK to UE1 with replacement of UE2's voice contact address with the IP address of MS. In this way a voice commmunication is setup between UE1 and UE2 via MS, a video communication is set up between MS and UE2, and MS is acting as a video client for UE1. It can thus insert an avatar that it retrieves from its video image database based on UE1's address in a voice communication between UE1 and UE2. More details on the use of SDP offer and answer is depicted in RFC 3264.

MS contains a voice signal analyser (not shown) that detects voice communication from UE1 to UE2 and samples this voice stream to obtain characteristics of the voice stream. The video image database contains different avatar videos for UE1 for different voice signals characteristics. The result of the sampling is used by MS to retrieve from the database the corresponding avatar video based on the session-id of the voice communication between UE1 and UE2. The characteristic can for instance indicate anger, fear, happiness a.s.o. and this is shown by the corresponding avatar video.

In an alternative embodiment AS sends an INVITE to UE2 with SDP content reflecting the IP address of MS as contact only for video communication. For voice communication the IP address of UE1 is used. Upon acceptance by UE2, AS returns the negotiated SDP result in 200 OK to UE1 with UE2's IP address of MS. In this way a voice commmunication is setup between UE1 and UE2, but not via MS, and a video communication is set up between MS and UE2. MS is thus acting as a video client for UE1, but the voice communication is handled by SC. An avatar is then inserted in each voice communication.

In an alternative, when the voice communication is handled by SC, MS gets instructions from SC, or in the alternative from AS, as to when to send an avatar video.

The above scenarios explain how an avatar is included in a voice communication between UE1 and UE2 when the connection is setup by UE1. In a similar way the avatar inclusion is realized when UE2 sets up the connection and UE1 accepts the connection with the video feature subscription, or when UE2 sets up the connection with the video feature subscription or when UE1 sets up the connection and UE2 accepts the connection with the video feature subscription. Insertion of the video SDP will then happen in the 200 OK response or in the 183 Early-Media response.

In the above scenarios UE1 does not support video communication, however they are equally well applicable if UE1 does supports video communication.

In an alternative embodiment where both UE1 and UE2 support video communication the video feature subscription indicates whether a video communication has to be set up with UE1 or with UE2 or with both. This information is then communicated to MS. AS then sets up video communications in accordance, i.e between MS and UE1 or between MS and UE2 or both and MS accordingly sends avatars to UE1 or UE2 or both upon detection of voice activity. Based on the content of the video feature subsscription MS can send an avatar video to UE1 or to UE2 or to both when detecting voice communication from UE1 to UE2, or from UE2 to UE1 or both.

In still another alternative, what video communication are set up, and when avatar videos are to be sent to what subscriber entity is determined by the stored user preferences of the concerned user entity.

In yet another alternative a negotiation protocol is used to negotiate when avatars are to be sent and to what user entity.

Although the above embodiment uses an IMS environment, the invention can equally well be realized in another communication environment that supports communication features and voice/video comunication such as a simple VoIP network.

Also, although the video images included in the communication in the considered embodiments are avatar videos, these can be any video image and they can include optional information such as subscriber location, timezone, local weather information a.s.o.

In addition, apart from a POTS phone the considered user entities can be any user entity not supporting video communication, f.i. an IP phone or any user entity supporting video communication, f.i. a PC or a PDA, with AN1 and AN2 then being corresponding access nodes.

In the above scenario's UE1 and UE2 are part of a one-to-one communication. They can however equally well be part of a multiparty conference.

The functions described above may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

Also although different functionalities are in the above described embodiment realized by different entities, some of these can be combined in a same entity.

The above description and drawing merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions. Moreover, all statements herein reciting principles, aspects, and embodiments of the invention, as well as specific example thereof, are intended to encompass equivalents thereof.

## Claims

1. Method for including a video image in a voice communication between a first user entity (UE1) and a second user entity (UE2) said method including the steps of :
- said first user entity (UE1) sending a request for setting up said voice communication with said second user entity (UE2) to a communication server (CS) said request including a feature subscription for inclusion of video images,
- said communication server (CS) upon detection of said feature subscription informing an application server (AS) thereof,
- said application server (AS) retrieving from a preference database user preference information for said first user entity (UE1) and forwarding said user preference information to a media server (MS),
- said application server (AS) setting up a video communication between said media server (MS) and said second user entity (UE2), said media server (MS) retrieving said video image from an image database based on said user preference information and sending said video image to said second user entity (UE2).

2. Method for including a video image in a voice communication between a first user entity (UE1) and a second user entity (UE2) said method including the steps of :
- said first user entity (UE1) sending a request for setting up said voice communication with said second user entity (UE2) to a communication server (CS) said request including a feature subscription for inclusion of video images,
- said communication server (CS) upon detection of said feature subscription informing an application server(AS) thereof,
- said application server (AS) retrieving from a preference database user preference information for said first user entity (UE1) and forwarding said user preference information to a media server (MS),
- said application server (AS) setting up a video communication between said media server (MS) and said first user entity (UE1), said media server (MS) retrieving said video image from an image database based on said user preference information and sending said video image to said first user entity (UE1).

3. Method for including a video image in a voice communication between a first user entity (UE1) and a second user entity (UE2) said method including the steps of :
- said first user entity (UE1) initiating said voice communication with said second user entity (UE2) via a communication server (CS),
- said second user entity (UE2) accepting said voice communication with a feature subscription for inclusion of video,
- said communication sever (CS) upon detection of said feature subscription informing an application server (AS) thereof,
- said application server (AS) retrieving from a user preference database user preference information for said second user entity (UE2) and forwarding said user preference information to a media server (MS),
- said application server (AS) setting up a video communication between said media server (MS) and said second user entity (UE2), said media server (MS) retrieving said video image from an image database based on said user preference information and sending said video image to said second user entity (UE2).

4. Method for including a video image in a voice communication between a first user entity (UE1) and a second user entity (UE2) said method including the steps of:
- said first user entity (UE1) initiating a voice communication with said second user entity (UE2) via a communication server (CS),
- said second user entity (UE2) accepting said voice communication with a feature subscription for inclusion of video,
- said communication sever (CS) upon detection of said feature subscription informing an application server (AS) thereof,
- said application server (AS) retrieving from a user preference database user preference information for said second user entity (UE2) and forwarding said user preference information to a media server (MS),
- said application server (AS) setting up a video communication between said media server (MS) and said first user entity (UE1), said media server (MS) retrieving said video image from an image database based on said user preference information and sending said video image to said first user entity (UE1).

5. Method according to claim 1 or 3, **characterized in that** said voice communication between said first user entity (UE1) and said second user entity (UE2) is performed via said media server (MS) and that said media server (MS) retrieves said video image from said image database when detecting voice communication at least from said first user entity (UE1) to said second user entity (UE2).

6. Method according to claim 2 or 4, **characterized in that** said voice communication between said first user entity (UE1) and said second user entity (UE2) is performed via said media server (MS) and that said media server (MS) retrieves said video image from said image database when detecting voice communication at least from said second user entity (UE2) to said first user entity (UE1).

7. Method according to claim 5 or 6, **characterized in that** said media server (MS) decides when to retrieve said video image based on said said user preference information.

8. Method according to claim 1, 2, 3 or 4, **characterized in that** said feature subscription contains information indicating with what user entity said video communication has to be set up.

9. Method according to claim 1, 2, 3 or 4, **characterized in that** said user preference information contains subinformation indicating with what user entity said video communication has to be set up.

10. Method according to claim 1, 2, 3 or 4 **characterized in that** said voice communication between said first user entity (UE1) and said second user entity (UE2) is performed via said communication server (CS).

11. Method according to claim 5, **characterized in that** selection of said video image from said image database is also made based on at least one characteristic of said voice communication.

12. Application server (AS) for realizing a method according to claim 1, 2, 3 or 4, **characterized in that** said application server includes processing means adapted to retrieve from a preference database user preference information for a user entity based on received feature subscription information for said user entity, said feature subscription information indicating that said user entity wishes to include video images in a voice communication with an other user entity, forwarding means adapted to forward said user preference information to a media server (MS) and communication set up means adapted to set up a video communication between said media server and either one of said user entity and said other user entity.

13. Application server (AS) according to claim 12, **characterized in that** said feature subscription information contains subinformation indicating with what user entity said video communication has to be set up and that said communication set up means are adapted to to set up said video communication between said media server (MS) and either one of said user entity and said other user entity based on said subinformation.

14. Application server (AS) according to claim 12, **characterized in that** said user preference information contains subinformation indicating with what user entity said video communication has to be set up and that said communication set up means are adapted to to set up said video communication between said media server and either one of said user entity and said other user entity based on said subinformation.

15. Media server (MS) for realizing a method according to claim 1, 2, 3 or 4, **characterized in that** said media server is adapted to retrieve a video image from an image database based on received user preference information and to send said video image over a video communication.

16. Media server (MS) according to claim 15, **characterized in that** said media server is further adapted to perform an analysis of a voice signal sent over a voice communication from a first user entity to a second user entity, said user preference information being related to either one of said first user entity (UE1) and said second user entity (UE2) and to retrieve said video image from said image database based in addition on a result of said analysis.

17. User entity (UE1 ; UE2) for realizing a method according to claim 1, 2, 3 or 4 **characterized in that** said user entity is adapted to generate at least in either one of a voice communication setup request and in a voice communication setup acceptance a feature subscription for inclusion of a video image in said voice communication.

## Amended claims

### Amended claims in accordance with Rule 137(2) EPC.

**1.** Method for including video images in a voice communication between a first user entity (UE1) not supporting video communication and a second user entity (UE2) supporting video communication said method including the steps of :
- said first user entity (UE1) sending a request for setting up said voice communication with said second user entity (UE2) to a communication server (CS) said request including a video feature indication indicating that said first user entity (UE1) wishes to include video images in said voice communication,
- said communication server (CS) upon detection of said video feature indication informing an application server (AS) thereof,
- said application server (AS) retrieving from a preference database user preference information related to video images available for said first user entity (UE1) and forwarding said user preference information to a media server (MS),
- said application server (AS) setting up a video communication between said media server (MS) and said second user entity (UE2),
- said media server (MS) detecting voice communication from said first user entity (UE1) to said second user entity (U2) and then retrieving a video image from an image database based on said user preference information and sending said video image to said second user entity (UE2).

**2.** Method for including video images in a voice communication between a first user entity (UE1) supporting video communication and a second user entity (UE2) not supporting video communication said method including the steps of :
- said first user entity (UE1) sending a request for setting up said voice communication with said second user entity (UE2) to a communication server (CS) said request including a video feature indication indicating that said first user entity (UE1) wishes to include video images in said voice communication,
- said communication server (CS) upon detection of said video feature indication informing an application server(AS) thereof,
- said application server (AS) retrieving from a preference database user preference information related to video images available for said first user entity (UE1) and forwarding said user preference information to a media server (MS),
- said application server (AS) setting up a video communication between said media server (MS) and said first user entity (UE1),
- said media server (MS) detecting voice communication from said first user entity (UE1) to said second user entity (U2) and then retrieving a video image from an image database based on said user preference information and sending said video image to said first user entity (UE1).

**3.** Method for including video images in a voice communication between a first user entity (UE1) not supporting video communication and a second user entity (UE2) supporting video communication said method including the steps of :
- said first user entity (UE1) initiating said voice communication with said second user entity (UE2) via a communication server (CS),
- said second user entity (UE2) accepting said voice communication with a video feature indication indicating that said second user entity (UE2) wishes to include video images in said voice communication,
- said communication sever (CS) upon detection of said video feature indication informing an application server (AS) thereof,
- said application server (AS) retrieving from a user preference database user preference information related to video images available for said second user entity (UE2) and forwarding said user preference information to a media server (MS),
- said application server (AS) setting up a video communication between said media server (MS) and said second user entity (UE2),
- said media server (MS) detecting voice communication from said first user entity (UE1) to said second user entity (U2) and then retrieving a video image from an image database based on said user preference information and sending said video image to said second user entity (UE2).

**4.** Method for including video images in a voice communication between a first user entity (UE1) supporting video communication and a second user entity (UE2) not supporting video communication said method including the steps of :
- said first user entity (UE1) initiating a voice communication with said second user entity (UE2) via a communication server (CS),
- said second user entity (UE2) accepting said voice communication with a video feature indication indicating that said second user entity (UE2) wishes to include video images in said voice communication,
- said communication sever (CS) upon detection of said video feature indication informing an application server (AS) thereof,
- said application server (AS) retrieving from a user preference database user preference information related to video images available for said second user entity (UE2) and forwarding said user preference information to a media server (MS),
- said application server (AS) setting up a video communication between said media server (MS) and said first user entity (UE1),
- said media server (MS) detecting voice communication from said first user entity (UE1) to said second user entity (U2) and then retrieving a video image from an image database based on said user preference information and sending said video image to said first user entity (UE1).

**5.** Method according to claim 1, 2, 3 or 4, **characterized in that** selection of said video image from said image database is also made based on at least one characteristic of said voice communication.

**6.** Application server (AS) for realizing a method according to claim 1, 2, 3 or 4, **characterized in that** said application server includes processing means adapted to retrieve from a preference database user preference information related to video images available for a user entity upon receipt of an indication that said user entity wishes to include video images in a voice communication set up with another user entity, forwarding means adapted to forward said user preference information to a media server (MS) and communication set up means adapted to set up a video communication between said media server and either one of said user entity and said other user entity depending on further information contained in said indication said further information indicating what user entity should receive said video images.

**7.** Media server (MS) for realizing a method according to claim 1, 2, 3 or 4, **characterized in that** said media server is adapted to retrieve a video image from an image database based on received user preference information and to send said video image over a video communication.

**8.** Media server (MS) according to claim 7, **characterized in that** said media server is further adapted to perform an analysis of a voice signal sent over a voice communication from a first user entity to a second user entity, said user preference information being related to either one of said first user entity (UE1) and said second user entity (UE2) and to retrieve said video image from said image database based in addition on a result of said analysis.

**9.** User entity (UE1 ; UE2) for realizing a method according to claim 1, 2, 3 or 4 **characterized in that** said user entity is adapted to generate at least in either one of a voice communication setup request and in a voice communication setup acceptance feature indication indicating that said second user entity (UE1 ;UE2) wishes to include video images in said voice communication.
